(19) Europäisches Patentamt
European Patent Office
Office européen des brevets

(11) **EP 3 331 733 B1**

(12) **EUROPÄISCHE PATENTSCHRIFT**

(45) Veröffentlichungstag und Bekanntmachung des Hinweises auf die Patenterteilung:
**24.10.2018 Patentblatt 2018/43**

(21) Anmeldenummer: **16748058.1**

(22) Anmeldetag: **03.08.2016**

(51) Int Cl.:
***B60T 7/06*** *(2006.01)*

(86) Internationale Anmeldenummer:
**PCT/EP2016/001335**

(87) Internationale Veröffentlichungsnummer:
**WO 2017/025176 (16.02.2017 Gazette 2017/07)**

(54) **VERSTELLBARES PEDAL FÜR EIN KRAFTFAHRZEUG**

DISPLACEABLE PEDAL FOR VEHICLE

PÉDALE AJUSTABLE POUR VEHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.08.2015 DE 102015010833**

(43) Veröffentlichungstag der Anmeldung:
**13.06.2018 Patentblatt 2018/24**

(73) Patentinhaber: **Audi AG**
**85045 Ingolstadt (DE)**

(72) Erfinder:
- **SCHMIDT, Oliver**
  **85290 Geisenfeld (DE)**
- **PAHLIG, Rene**
  **08058 Zwickau (DE)**

(56) Entgegenhaltungen:
WO-A1-01/77772 DE-A1- 10 335 403
JP-A- S6 354 615 US-A1- 2003 084 749

**Beschreibung**

Die Erfindung betrifft ein verstellbares Pedal für ein Kraftfahrzeug gemäß der im Oberbegriff des Patentanspruches 1 angegebenen Art.

Verstellbare Pedale für Kraftfahrzeuge sind aus dem Stand der Technik hinreichend bekannt. Hierdurch ist es möglich, die Position eines Pedals in Bezug auf die Körpergröße des Fahrers einzustellen, nämlich indem bei kleineren Personen das Pedal im Fußraum auf den Fahrer zu bewegt bzw. bei größeren Personen das Pedal im Fußraum vom Fahrer weg bewegt wird.

Ein derartiges verstellbares Pedal für ein Kraftfahrzeug ist beispielsweise in der DE 103 35 403 A1 offenbart. Das darin beschriebene Pedal ist um eine Pedalachse schwenkbar gelagert und umfasst einen oberen Pedalarm sowie einen relativ zum oberen Pedalarm verstellbaren, eine Pedalplatte aufweisenden unteren Pedalarm. Beim Verstellen des Pedals führen der untere Pedalarm und damit auch die daran starr angeordnete Pedalplatte eine bogenförmige Bewegung aus. Die Pedalverstellung beeinflusst auch das Pedalübersetzungsverhältnis, d.h. das Verhältnis der Abstände zwischen Pedalachse und Pedalplatte sowie zwischen Pedalachse und Anlenkstelle zur Kopplung mit einer zu betätigenden Einrichtung, z.B. zur Anlenkung einer Stößelstange eines Bremssystems, was wiederum zu einer negativen Rückwirkung auf das Bremsgefühl des Fahrers führen kann.

Die US 2003/0084749 A1 offenbart ein verstellbares Pedal, umfassend einen um eine Lagerachse schwenkbaren Pedalarm und einen relativ zum Pedalarm verstellbaren, eine starre Pedalplatte aufweisenden Pedalgrundkörper.

Hierbei ist der Pedalgrundkörper um einen Lagerpunkt schwenkbar am Pedalarm gelagert.

Ein verstellbares Pedal für ein Kraftfahrzeug mit einer um ein Drehlager drehbar am Pedalarm angeordneten Pedalplatte, ist aus der WO 01/77772 A1 bekannt.

Der Erfindung liegt die Aufgabe zugrunde, ein verstellbares Pedal für ein Kraftfahrzeug gemäß der im Oberbegriff des Patentanspruches 1 angegebenen Art derart weiterzubilden, dass ungünstige, das Bremsgefühl des Fahrers negativ beeinflussende Pedalübersetzungsverhältnisse bei der Verstellung vermieden werden.

Diese Aufgabe wird durch die kennzeichnenden Merkmale des Patentanspruches 1 in Verbindung mit seinen Oberbegriffsmerkmalen gelöst.

Die Unteransprüche bilden vorteilhafte Weiterbildungen der Erfindung.

In bekannter Art und Weise umfasst das verstellbare Pedal für ein Kraftfahrzeug einen Pedalarm, der schwenkbar um eine Pedalachse an einem Lagerblock gelagert ist und der eine Anlenkstelle zur Kopplung mit einer von dem Pedal zu betätigenden Einrichtung aufweist, wobei die Anlenkstelle über eine erste Hebelarmlänge $L_1$ von der Pedalachse beanstandet ist. Das Pedal umfasst ferner einen am Pedalarm gelagerten und relativ zum Pedalarm verstellbaren Pedalgrundkörper, eine Pedalplatte, die in einem Lagerpunkt am unteren Ende des Pedalgrundkörpers angeordnet ist und deren Lagerpunkt über eine zweite Hebelarmlänge $L_2$ von der Pedalachse beanstandet ist, sowie eine Verstelleinheit, die als Antrieb auf den Pedalgrundkörper wirkt und mittels der unter Änderung der zweiten Hebelarmlänge $L_2$ eine bogenförmige Verstellbewegung des Pedalgrundkörpers und der daran angeordneten Pedalplatte initiierbar ist. Zudem ist die Anlenkstelle in Bezug zum Pedalarm relativ verstellbar gelagert, wobei die Verstelleinheit auch als Antrieb auf die verstellbar gelagerte Anlenkstelle wirkt und mittels der Verstelleinheit die Anlenkstelle unter Änderung der ersten Hebelarmlänge L1 in Bezug zum Pedalarm verstellbar ist.

Hierdurch ist gewährleistet, dass mittels der Verstelleinheit bei einer Verstellung des Pedals sowohl die erste Hebelarmlänge $L_1$ als auch die zweite Hebelarmlänge $L_2$ gezielt verändert werden, so dass eine gezielte Beeinflussung des Pedalübersetzungsverhältnisses ermöglicht ist, und somit ein negatives Pedalgefühl verhindert werden kann.

Erfindungsgemäß ist der Pedalgrundkörper um einen ersten Pedallagerpunkt und um einen zweiten Pedallagerpunkt schwenkbar am Pedalarm gelagert, wobei die beiden Pedallagerpunkte relativ zum Pedalarm translatorisch geführt bewegbar sind. In Fahrzeughochrichtung (z-Richtung) und Fahrzeuglängsrichtung (x-Richtung) betrachtet, handelt es sich bei dem ersten Lagerpunkt um den oberen, hinteren Lagerpunkt bzw. beim zweiten Lagerpunkt um den unteren, vorderen Lagerpunkt. Die schwenkbare Anordnung des Pedalgrundkörpers um die beiden Pedallagerpunkte hat den Effekt, dass bei einer Verstellbewegung der Pedalgrundkörper eine Relativbewegung um einen Momentanpol ausführt. Hierdurch ist in vorteilhafter Weise gewährleistet, dass die bogenförmige Bewegung des Pedalgrundkörpers und damit der Pedalplatte durch eine entsprechende Positionierung, Ausrichtung und Länge der translatorischen Führung der beiden Pedallagerpunkte gezielt beeinflussbar ist.

Gemäß einer Ausführungsform der Erfindung ist die Verstelleinheit derart ausgebildet, dass bei einer durch die Verstelleinheit initiierten Verstellung des Pedals ein konstantes Pedalübersetzungsverhältnis, d.h.

$$\frac{erste\ Hebelarmänge\ (L_1)}{zweite\ Hebelarmlänge\ (L_2)} = const$$

vorliegt.

Gemäß einer anderen Ausführungsform der Erfindung ist die Verstelleinheit derart ausgebildet, dass bei einer durch die Verstelleinheit initiierten Verstellung des Pedals eine definierte Änderung des Pedalversetzungsverhältnisses

$$\frac{erste\ Hebelarmänge\ (L_1)}{zweite\ Hebelarmlänge\ (L_2)}$$

auftritt.

Vorzugsweise umfasst hierfür die Verstelleinheit eine Spindel und eine mit der Anlenkstelle, z.B. über eine Koppelstange, in Wirkverbindung stehende Verstellführung. Hierbei ist die Spindel mit einem ersten Gewindeabschnitt und einen zweiten Gewindeabschnitt versehen. Während der als Pendelmutter ausgebildete erste Pedallagerpunkt im Bereich des ersten Gewindeabschnitts auf der Spindel geführt ist, ist die ein Innengewinde aufweisende Verstellführung im Bereich des zweiten Gewindeabschnitts auf der Spindel geführt, wobei die beiden Gewindeabschnitte derart unterschiedliche Gewindesteigungen aufweisen, dass ein konstantes Pedalübersetzungsverhältnis vorliegt bzw. die beiden Gewindeabschnitte sind so aufeinander abgestimmt, dass eine definierte Änderung des Pedalübersetzungsverhältnisses auftritt .

Alternativ umfasst hierfür die Verstelleinheit eine erste Spindel mit einer ersten Gewindesteigung, eine zweite Spindel mit einer zweiten Gewindesteigung und eine mit der Anlenkstelle in Wirkverbindung stehende Verstellführung. Während der in Form einer Pendelmutter ausgebildete erste Pedallagerpunkt auf der ersten Spindel geführt ist, ist die ein Innengewinde aufweisende Verstellführung auf der zweiten Spindel geführt, wobei die Gewindesteigungen der ersten und zweiten Spindel derart unterschiedliche Gewindesteigungen aufweisen, dass ein konstantes Pedalübersetzungsverhältnis vorliegt bzw. die Gewindesteigungen sind so aufeinander abgestimmt, dass eine definierte Änderung des Pedalübersetzungsverhältnisses auftritt.

Durch die Verwendung der Spindel(n) in vorteilhafter Weise ist eine stufenlose Einstellung der Pedalposition ermöglicht.

Vorzugsweise ist der zweite Pedallagerpunkt des Pedalgrundkörpers in Form eines Kulissenstifts ausgebildet, der in einer im Pedalarm ausgebildeten Kulissenbahn eingreift und in der Kulissenbahn translatorisch geführt ist.

Wie bereits dargelegt, führt bei einer Verstellbewegung der Pedalgrundkörper eine Relativbewegung um einen Momentanpol aus. Je nach Lage des Momentanpols ist dabei die rotatorische Bewegung mehr oder weniger stark ausgeprägt. Da die fest am Pedalgrundkörper montierte Pedalplatte die gleiche Drehbewegung ausführt, kann dies dazu führen, dass - je nach Verdrehwinkel - in Extremlagen die Pedalplatte ungünstig zum Betätigungsfuß des Fahrers positioniert ist, sodass eine Pedalbetätigung erschwert ist.

Zur Vermeidung dieser Nachteile ist gemäß einer besonders vorteilhaften Ausführungsform der Erfindung vorgesehen, dass der Lagerpunkt der Pedalplatte als Drehlager ausgebildet ist, und dass das Drehlager der Pedalplatte mit Mittel in Wirkverbindung stehen, die eine zwangsgeführte - einer aus der bogenförmigen Verstellbewegung des Pedalgrundkörpers relativ zum Pedalarm resultierenden Änderung des Neigungswinkel der Pedalplatte entgegen gerichtete - Drehbewegung der Pedalplatte um das Drehlager bewirken.

Alternativ kann durch die die zwangsgeführte Drehbewegung der Pedalplatte bewirkenden Mittel die Pedalplatte auch mit der Drehrichtung der Verstellbewegung verdreht werden, z.B., wenn die bogenförmige Verstellbewegung des Pedalgrundkörpers weniger stark ausgeprägt ist.

Vorzugsweise sind hierbei die Mittel in Form einer zwischen der Pedalplatte und dem zweiten Pedallagerpunkt angeordneten Bowdenzugverbindung oder Koppelstangenverbindung ausgebildet. Hierbei ist die Bowdenzugverbindung bzw. die Koppelstangenverbindung radial beabstandet zur Drehachse des Drehlagers an der Pedalplatte und radial beabstandet zur Schwenkachse des in Bezug zum Pedalarm translatorisch bewegbaren zweiten Pedallagerpunkts gelagert. Da bei einer Pedalverstellung, d.h. der Pedalgrundkörper verschiebt sich entsprechend seiner translatorischen Führung entlang dem Pedalarm und der Pedalgrundkörper verdreht sich entsprechend der Lage der beiden Pedallagerpunkte, eine Relativbewegung zwischen dem zweiten Pedallagerpunkt und dem Lagerpunkt der Pedalplatte auftritt, ist durch die Bowdenzugverbindung bzw. Koppelstangenverbindung in vorteilhafter Weise gewährleistet, dass die Relativbewegung zwischen zweiten Pedallagerpunkt und Lagerpunkt der Pedalplatte entsprechend der gewählten radialen Beabstandung in eine Verdrehung der Pedalplatte gewandelt wird, sodass die in Folge der bogenförmigen Verstellbewegung auftretenden Winkeländerung der Pedalplatte ausgeglichen werden kann.

Bei der Betätigung des Pedals wirken mitunter hohe Betätigungskräfte auf die Pedalplatte, insbesondere, wenn der Kontaktpunkt außerhalb der Pedalplattendrehachse liegt. Um die Bowdenzugverbindung oder die Koppelstangenverbindung von den Betätigungskräften zu entkoppeln, ist gemäß einer weiteren Ausführungsform der Erfindung vorgesehen, dass in die Pedalplatte ein eine Drehbewegung der Pedalplatte um das Drehlager hemmender Verriegelungsmechanismus integriert ist, der bei einer Verstellung des Pedal entriegelt und die Pedalplatte zur Drehung um das Drehlager freigibt.

Vorzugsweise umfasst der Verriegelungsmechanismus ein auf einem Lagerzapfen des Drehlagers drehbar angeordnetes, die Pedalplatte lagerndes erstes Ringelement, ein auf dem Lagerzapfen drehfest angeordnetes, gegen eine Federkraft eines Federelements in Bezug zum ersten Ringelement axial verschiebbar angeordnetes zweites Ringelement sowie einen Elektromagnet zum axialen Verschieben des zweiten Ringelements gegen die Federkraft des Federelements. Die beiden Ringelemente weisen jeweils eine Verzahnung auf, über die die Ringelemente im verriegelten Zustand miteinander im Eingriff stehen bzw. in entriegelter Position, d.h. nach einem axialen Verschieben des zweiten Ringelements, nicht in Eingriff stehen, sodass das erste Ringelement und damit die Pedalplatte verdrehbar ist.

Weitere Vorteile, Merkmale und Anwendungsmöglichkeiten der vorliegenden Erfindung ergeben sich aus der nachfolgenden Beschreibung in Verbindung mit den in der Zeichnung dargestellten Ausführungsbeispielen.

In der Zeichnung bedeutet:

Fig. 1      eine Seitenansicht eines erfindungsmäßen Pedals;

Fig. 2      das Pedal aus Fig. 1 in geschnittener Darstellung;

Fig. 2a     eine schematische Darstellung der kinematischen Zusammenhänge beim Verstellen des Pedals aus Fig. 2;

Fig. 3      eine vergrößerte Darstellung der Verstelleinrichtung des Pedals;

Fig. 4      eine vergrößerte Darstellung einer weiteren Verstelleinrichtung des Pedals;

Fig. 5      eine vergrößerte Darstellung des Verstellmechanismus der Pedalplatte, und

Fig. 6      einen Schnittdarstellung gemäß A-A aus Fig. 1.

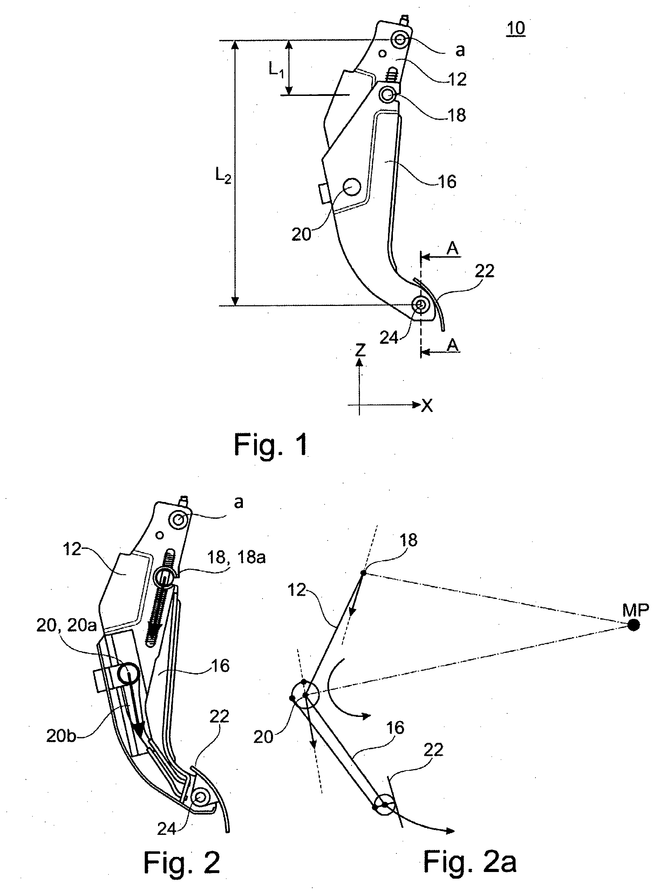

Fig. 1 zeigt ein insgesamt mit der Bezugsziffer 10 bezeichnetes verstellbares Pedal für ein Kraftfahrzeug.

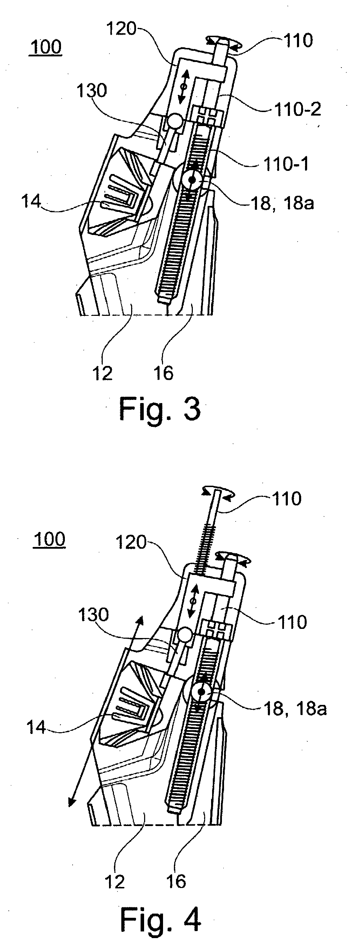

Das Pedal 10 umfasst einen Pedalarm 12, der um eine Pedalachse a schwenkbar an einem - hier aus Gründen der Übersichtlichkeit nicht dargestellten - Lagerblock gelagert ist. In bekannter Art und Weise weist der Pedalarm 12 eine Anlenkstelle 14 auf, über die das Pedal 10 mit einer zu betätigenden Einrichtung, wie z.B. Anlenkung einer Stößelstange eines Bremssystems, koppelbar ist, vgl. Fig. 3, 4. Vorliegend ist die Anlenkstelle 14 in Bezug zum Pedalarm 12 relativ verstellbar gelagert.

Das Pedal 10 umfasst ferner einen Pedalgrundkörper 16, der über einen ersten Pedallagerpunkt 18 und einen zweiten Pedallagerpunkt 20 schwenkbar am Pedalarm 12 gelagert ist, wobei die beiden Pedallagerpunkte 18, 20 ihrerseits jeweils translatorisch geführt in Bezug zum Pedalarm 12 bewegbar sind, siehe auch Fig. 2.

Hierzu ist, wie Fig. 2 zu entnehmen ist, der erste Pedallagerpunkt 18 in Form einer Pendelmutter 18a ausgebildet, die auf einer Spindel translatorisch geführt ist. Auf die Funktion der Spindel wird im weiteren Verlauf noch weiter eingegangen. Der in Fahrzeughochrichtung (z-Richtung) und Fahrzeuglängsrichtung (x-Richtung) in Bezug zu ersten Pedallagerpunkt 18 weiter unten und weiter vorne angeordnete zweite Pedallagerpunkt 20, ist in Form eines Kulissenstifts 20a ausgebildet, der in einer im Pedalarm 12 ausgebildeten Kulissenbahn 20b eingreift und in dieser translatorisch geführt ist.

Das Pedal 10 umfasst weiterhin eine am unteren Ende des Pedalgrundkörpers 16 angeordnete Pedalplatte 22.

Der Abstand zwischen Pedalachse a und Anlenkstelle 14 wird nachfolgend als erste Hebelarmlänge $L_1$ und der Abstand zwischen Pedalachse a und Lagerpunkt 24 der Pedalplatte 22 als zweite Hebelarmlänge $L_2$ bezeichnet, vgl. Fig. 1.

Zudem umfasst das Pedal 10 eine insgesamt mit dem Bezugsziffer 100 bezeichnete Verstelleinheit, die als Antrieb auf den Pedalgrundkörper 16 wirkt und über die eine bogenförmige Verstellbewegung des Pedalgrundkörpers 16 und der daran angeordneten Pedalplatte 22 initiierbar ist, vgl. Fig. 3 und 4.

Gemäß der in Fig. 3 gezeigten Ausführungsform der Verstelleinheit 100, umfasst diese eine Spindel 110 und eine Verstellführung 120, die über eine Koppelstange 130 mit der verstellbar am Pedalarm 12 gelagerten Anlenkstelle 14 in Wirkverbindung steht. Hierbei umfasst die Spindel 110 einen ersten Gewindeabschnitt 110-1 und einen zweiten Gewindeabschnitt 110-2.

Während der als Pendelmutter 18a ausgebildete erste Pedallagerpunkt 18 im Bereich des ersten Gewindeabschnitts 110-1 auf der Spindel 110 geführt ist, ist die ein Innengewinde aufweisende Verstellführung 120 im Bereich des zweiten Gewindeabschnitts 110-2 auf der Spindel 110 geführt.

Wird nun die Spindel 110 über einen rotatorischen Antrieb, z.B. einen Elektromotor, angetrieben, führt aufgrund der Verdrehung der Spindel 110 die Verstellführung 120 eine Linearbewegung aus und wirkt als Antrieb über die Koppelstange 130 auf die Anlenkstelle 14. Die Bewegungsrichtung der Anlenkstelle 14 ist hierbei durch eine Führungsbahn im Pedalarm 12 vorgegeben. Aufgrund der Bewegung der Anlenkstelle 14 wird die erste Hebelarmlänge $L_1$ beeinflusst.

Die Pendelmutter 18a, d.h. der erste Pedallagerpunkt 18, führt bei der Drehung der Spindel 110 eine Linearbewegung aus und wirkt als Antrieb auf den Pedalgrundkörper 16.

Da der Pedalgrundkörper 16 über den als Pendelmutter 18a ausgebildeten ersten Pedallagerpunkt 18 und den als Kulissenstift 20a ausgebildeten Pedallagerpunkt 20 schwenkbar am Pedalarm 12 gelagert ist und zudem die Pendelmutter 18a über die Spindel 110 und der Kulissenstift 20a über die Kulissenbahn 20b relativ zum Pedalarm 12 translatorisch geführt sind, führt der Pedalgrundkörper 16 eine Relativbewegung um einen Momentanpol MP aus, vgl. Fig. 2a, was eine vorteilhafte Bewegung der Pedalplatte 22 bewirkt.

Über eine gezielte Beeinflussung der Ausrichtung und der Länge der Bewegungsbahnen des ersten und zweiten Pedallagerpunkt 18,20 kann dabei die Bewegung der Pedalplatte 22 gezielt vorteilhaft beeinflusst werden.

Aufgrund der beschriebenen Bewegung der Pedalplatte 22 wird auch die zweite Hebelarmlänge $L_2$ beeinflusst.

Vorliegend weisen die beiden Gewindeabschnitte 110-1, 110-2 der Spindel 110 derart unterschiedliche Gewindesteigungen auf, dass ein konstantes Pedalübersetzungsverhältnis, d.h.

$$\frac{erste\ Hebelarmänge\ L_1}{zweite\ Hebelarmlänge\ L_2} = const$$

vorliegt.

Eine weitere Ausführungsform der Verstelleinrichtung 100 ist in Fig. 4 dargestellt. In Übereinstimmung mit der bereits beschriebenen Ausführungsform, weist die in Fig. 4 dargestellte Verstelleinrichtung 100 eine Pendelmutter 18a und eine Verstellführung 120 auf, die über eine Koppelstange 130 mit der Anlenkstelle 14 in Wirkverbindung steht. Im Gegensatz zu der bereits geschilderten Ausführungsform, umfasst die in Fig. 4 dargestellte Ausführungsform der Verstelleinrichtung 100 zwei Spindeln 110, die unterschiedliche Gewindesteigungen aufweisen, wobei auf einer der Spindel 110 die Pendelmutter 18a und auf der anderen Spindel 110 die Verstellführung angeordnet ist und die Pendelmutter 18a und die Verstellführung 120 über ihre jeweilige Spindel 110 translatorisch geführt sind.

Gemäß der in Fig. 4 dargestellten Ausführungsform sind vorliegend die Gewindesteigungen der beiden Spindel 110 so aufeinander abgestimmt, dass bei einer Verstellung des Pedals 10 eine definierte Änderung des Pedalübersetzungsverhältnisses

$$\frac{erste\ Hebelarmänge\ L_1}{zweite\ Hebelarmlänge\ L_2}$$

auftritt.

Wie bereits ausgeführt, führt der Pedalgrundkörper 16 bei der Pedalverstellung eine Relativbewegung um einen Momentanpol MP aus, vgl. Fig. 2a.

Abhängig von der Lage des Momentanpols MP beschreibt der Pedalgrundkörper 16 und damit eine daran montierte Pedalplatte 22 eine mehr oder weniger stark ausgeprägte rotatorische Bewegung. Je nach Verdrehwinkel kann dies dazu führen, dass die Pedalplatte 22 ungünstig zum Betätigungsfuß eines Fahrers positioniert ist und damit die Betätigung des Pedals erschwert ist. Daher ist es von Vorteil, die Pedalplatte 22 in Abhängigkeit von der Pedalverstellung so zu verdrehen, dass eine einfache Betätigung der Pedalplatte 22 gewährleistet ist.

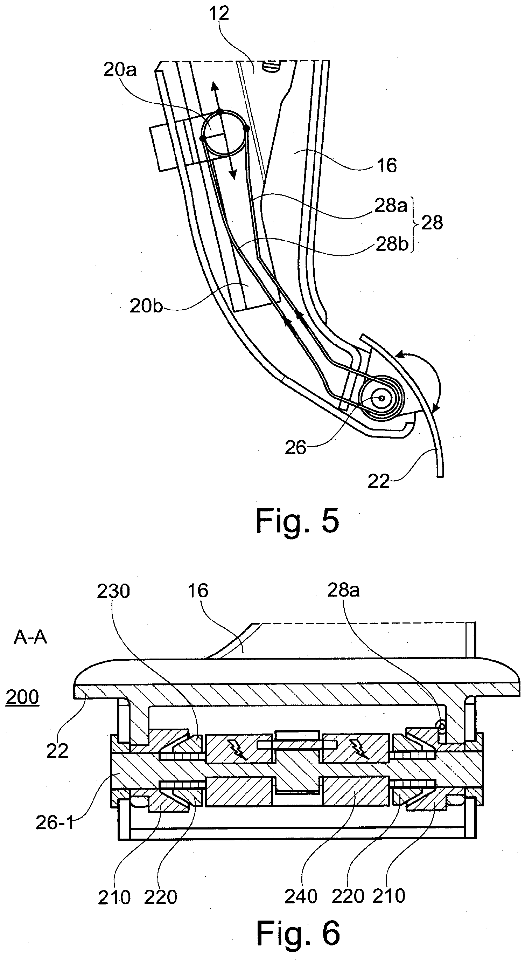

Hierzu ist, wie in Fig. 5 dargestellt, der Lagerpunkt 24 der Pedalplatte 22 als ein Drehlager 26 ausgebildet. Zudem ist zwischen Kulissenstift 20a und der Pedalplatte 22 eine Bowdenzugverbindung 28 angeordnet. Die Bowdenzugverbindung 28 ist dabei in einem definierten Radius um die Lagerpunkte, d.h. Kulissenstift 20a bzw. Drehlager 26, angebracht. Das Verhältnis der Radien zueinander ergibt dabei ein Übersetzungsverhältnis. Verschiebt sich nun der Kulissenstift 20a entsprechend seiner linearen Führung in der Kulissenbahn 20b und damit der Pedalgrundkörper 16 in Bezug zum Pedalarm 12 bei gleichzeitiger Verdrehung des Pedalgrundkörpers 16 um den Momentanpol MP, kommt es zu einer Relativbewegung zwischen dem Kulissenstift 20a und dem Drehlager 26 der Pedalplatte 22. Der Bowdenzug 28a der Bowdenzugverbindung 28 wandelt, entsprechend den Radien, die Längenänderung in eine Verdrehung der Pedalplatte 22 und gleicht damit die Winkeländerung der Pedalplatte 22 in Folge einer Pedalverstellung in gewünschter Weise aus.

Bei der Betätigung des Pedals 10 wirken mit unter hohe Betätigungskräfte auf die Pedalplatte 22, insbesondere wenn der Kontaktpunkt außerhalb der Pedalplattendrehachse liegt. Um die Bowdenzugverbindung 28 von den Betätigungskräften zu entkoppeln, ist - wie in Fig. 6 dargestellt - in die Pedalplatte 22 ein eine Drehbewegung der Pedalplatte

22 um das Drehlager 26 hemmender Verriegelungsmechanismus 200 integriert, der bei einer Verstellung des Pedals 10 entriegelt und die Pedalplatte 22 zur Drehung um das Drehlager 26 freigibt.

Der Verriegelungsmechanismus 200 umfasst zwei auf einem Lagerzapfen 26-1 des Drehlagers 26 drehbar angeordnete, die Pedalplatte 22 lagernde erste Riegelelemente 210, zwei den ersten Riegelelementen 210 axial gegenüberliegend positionierte zweite Riegelelemente 220, die auf dem Lagerzapfen 26-1 drehfest und gegen eine Federkraft eines Federelementen 230 axial verschiebbar angeordnet sind, sowie einen Elektromagneten 240 zum axialen Verschieben der zweiten Riegelelemente 220 gegen die Federkraft des Federelement 230. Über eine kegelförmige Zahnradverbindung stehen die ersten und zweiten Regelelemente 210,220 miteinander in Eingriff.

Soll nun das Pedal 10 verstellt werden, werden die zweiten Riegelelemente 220 durch den Elektromagneten 240 aus dem Kegelsitz gehoben. Der an der Pedalplatte 22 angeordnete Bowdenzug 28a verdreht daraufhin die Pedalplatte 22 entsprechend dem Übersetzungsverhältnis. Ist der Verstellvorgang abgeschlossen oder bedarf es einer Verriegelung des Mechanismus, z.B. durch Erkennung einer Fahrerbetätigung, fällt das Magnetfeld ab und die zweiten Riegelelemente 220 werden durch das Federelement 230 wieder in den Kegelsitz gedrückt.

**Patentansprüche**

1. Verstellbares Pedal (10) für ein Kraftfahrzeug, umfassend

   - einen Pedalarm (12), der schwenkbar um eine Pedalachse (a) an einem Lagerblock gelagert ist und der eine Anlenkstelle (14) zur Kopplung mit einer von dem Pedal (10) zu betätigenden Einrichtung aufweist, wobei die Anlenkstelle (14) über eine erste Hebelarmlänge ($L_1$) von der Pedalachse (a) beabstandet ist,
   - einen am Pedalarm (12) gelagerten und relativ zum Pedalarm (12) verstellbaren Pedalgrundkörper (16);
   - eine Pedalplatte (22), die in einem Lagerpunkt (24) am unteren Ende des Pedalgrundkörpers (16) angeordnet ist, wobei der Lagerpunkt (24) der Pedalplatte (22) über eine zweite Hebelarmlänge ($L_2$) von der Pedalachse (a) beabstandet ist, sowie
   - eine Verstelleinheit (100), die als Antrieb auf den Pedalgrundkörper (16) wirkt und mittels der unter Änderung der zweiten Hebelarmlänge ($L_2$) der Pedalgrundkörper (16) und die daran angeordnete Pedalplatte (22) in Bezug zum Pedalarm (12) eine bogenförmige Verstellbewegung ausführen,

   wobei die Anlenkstelle(14) in Bezug zum Pedalarm (12) relativ verstellbar gelagert ist, und dass die Verstelleinheit (100) auch als Antrieb auf die verstellbar gelagerte Anlenkstelle (14) wirkt und die Anlenkstelle (14) mittels der Verstelleinheit (100) unter Änderung der ersten Hebelarmlänge ($L_1$) in Bezug zum Pedalarm (12) verstellbar ist, **dadurch gekennzeichnet, dass** der Pedalgrundkörper (16) um einen ersten Pedallagerpunkt (18) und um einem zweiten Pedallagerpunkt (20) schwenkbar am Pedalarm (12) gelagert ist, wobei der erste und zweite Pedallagerpunkt (18, 20) relativ zum Pedalarm (12) translatorisch geführt bewegbar sind.

2. Verstellbares Pedal (10) nach Anspruch 1, **dadurch gekennzeichnet, dass** die Verstelleinheit (100) derart ausgebildet ist, dass bei einer durch die Verstelleinheit (100) initiierten Verstellung des Pedals (10) ein konstantes Pedalübersetzungsverhältnis

$$\frac{erste\ Hebelarm\ddot{a}nge\ (L_1)}{zweite\ Hebelarml\ddot{a}nge\ (L_2)} = const$$

   vorliegt.

3. Verstellbares Pedal (10) nach Anspruch 1, **dadurch gekennzeichnet, dass** die Verstelleinheit (100) derart ausgebildet ist, dass bei einer durch die Verstelleinheit (100) initiierten Verstellung des Pedals (10) eine definierte Änderung des Pedalübersetzungsverhältnisses

$$\frac{erste\ Hebelarm\ddot{a}nge\ (L_1)}{zweite\ Hebelarml\ddot{a}nge\ (L_2)}$$

   auftritt.

4. Verstellbares Pedal (10) nach Anspruch 2 oder 3, **dadurch gekennzeichnet, dass** die Verstelleinheit (100) eine Spindel (110) und eine mit dem Anlenkstelle (14) in Wirkverbindung stehende Verstellführung (120) umfasst, wobei die Spindel (110) einen ersten Gewindeabschnitt (110-1) und einen zweiten Gewindeabschnitt (110-2) aufweist und der erste Pedallagerpunkt (18) des Pedalgrundkörpers (16) in Form einer auf der Spindel (110) im Bereich des ersten Gewindeabschnitts (110-1) geführten Pendelmutter (18a) ausgebildet ist und die Verstellführung (120) über einen ein Innengewinde aufweisenden Verstellführungsabschnitt im Bereich des zweiten Gewindeabschnitts (110-2) auf der Spindel (110) geführt ist, wobei die beiden Gewindeabschnitte (110-1, 110-2) derart unterschiedliche Gewindesteigungen aufweisen, dass ein konstantes Pedalübersetzungsverhältnis vorliegt oder eine definierte Änderung des Pedalübersetzungsverhältnisses auftritt.

5. Verstellbares Pedal (10) nach Anspruch 2 oder 3, **dadurch gekennzeichnet, dass** die Verstelleinheit (100) eine erste Spindel (110) mit einer ersten Gewindesteigung (110-1), eine zweite Spindel (110) mit einer zweiten Gewindesteigung (110-2) und eine mit dem Anlenkstelle (14) in Wirkverbindung stehende Verstellführung (120) umfasst, wobei der erste Pedallagerpunkt (18) des Pedalgrundkörpers (16) in Form einer auf der ersten Spindel (110) geführten Pendelmutter (18a) ausgebildet ist und die Verstellführung (120) ein Innengewinde aufweist und auf der zweiten Spindel (110) geführt ist, wobei die Gewindesteigungen (110-1, 110-2) der ersten und zweiten Spindel (110) so aufeinander abgestimmt sind, dass ein konstantes Pedalübersetzungsverhältnis vorliegt oder eine definierte Änderung des Pedalübersetzungsverhältnisses auftritt.

6. Verstellbares Pedal (10) nach einem der vorgenannten Ansprüche, **dadurch gekennzeichnet, dass** der zweite Pedallagerpunkt (20) des Pedalgrundkörpers (16) in Form eines Kulissenstifts (20a) ausgebildet ist, der in einer im Pedalarm (12) ausgebildeten Kulissenbahn (20b) eingreift und in der Kulissenbahn (20b) translatorisch geführt ist und dass der Lagerpunkt (24) der Pedalplatte (22) als Drehlager (26) ausgebildet ist, wobei zwischen Pedalplatte (22) und Kulissenstift (20a) eine Bowdenzugverbindung (28) oder Koppelstangenverbindung ausgebildet ist, wobei die Bowdenzugverbindung (28) oder die Koppelstangenverbindung derart in einem ersten Radius beabstandet zum Kulissenstift (20a) und in einem zweiten Radius beabstandet zum Drehlager (26) angeordnet sind, dass das Verhältnis der Radien ein Übersetzungsverhältnis ergibt, so dass die Bowdenzugverbindung oder die Koppelstangenverbindung die bei einer Verschiebung des Kulissenstift (20a) entsprechend seiner linearen Führung in der Kulissenbahn (20b) und damit des Pedalgrundkörpers (16) in Bezug zum Pedalarm (12) und gleichzeitiger Verdrehung des Pedalgrundkörpers (16) um den Momentalpol (MP) auftretende Relativbewegung zwischen Kulissenstift (20a) und Drehlager (26) der Pedalplatte (22) und die daraus resultierende Längenänderung in eine Verdrehung der Pedalplatte (22) gewandelt wird.

7. Verstellbares Pedal (10) nach Anspruch 6, **dadurch gekennzeichnet, dass** in die Pedalplatte (22) ein eine Drehbewegung der Pedalplatte (22) um das Drehlager (26) hemmender Verriegelungsmechanismus (200) integriert ist, der bei einer Verstellung des Pedals (10) entriegelt und die Pedalplatte (22) zur Drehung um das Drehlager (26) freigibt.

8. Verstellbares Pedal (10) nach Anspruch 7, **dadurch gekennzeichnet, dass** der Verriegelungsmechanismus (200) ein auf einem Lagerzapfen (26-1) des Drehlagers (26) drehbar angeordnetes, die Pedalplatte (22) lagerndes erstes Riegelelement (210), ein auf dem Lagerzapfen (26-1) drehfest und gegen eine Federkraft eines Federelements (230) axial verschiebbar angeordnetes zweites Riegelelement (220), und einen Elektromagnet (240) zum axialen Verschieben des zweiten Riegelelements (220) gegen die Federkraft des Federelements (230) umfasst, wobei das erste und zweite Riegelelement (210, 220) über eine Verzahnung miteinander in Eingriff stehen.

## Claims

1. Displaceable pedal (10) for a motor vehicle, comprising

   - a pedal arm (12), which is pivotably supported around a pedal axis (a) at a support block and which has a coupling point (14) for coupling with a device to be operated by the pedal (10), wherein the coupling point (14) is distanced by a first lever arm length ($L_1$) from the pedal axis (a),
   - a pedal basic body (16) supported at the pedal arm (12) and adjustable relative to the pedal arm (12);
   - a pedal plate (22) which is disposed in a bearing point (24) at the lower end of the pedal basic body (16), wherein the bearing point (24) of the pedal plate (22) is distanced by a second lever arm length ($L_2$) from the pedal axis (a), and
   - a displacing unit (100), which functions as actuator on the pedal basic body (16) and by means of which, with a change of the second lever arm length (L$_2$), the pedal basic body (16) and the pedal plate (22) disposed thereon carry out with respect to the pedal arm (12) a curve-shaped displacement movement,

wherein the coupling point (14) is mounted relatively displaceably with respect to the pedal arm (12), and that the displacing unit (100) also functions as actuator on the displaceably supported coupling point (14) and the coupling point (14) by means of the displacing unit (100) with a change of the first lever arm length (L$_1$) is displaceable with respect to the pedal arm (12), **characterised in that** the pedal basic body (16) is supported at the pedal arm (12) pivotably around a first pedal bearing point (18) and a second pedal bearing point (20), wherein the first and second pedal point (18, 20) are movable, guided translatably with respect to the pedal arm (12).

2. Displaceable pedal (10) according to claim 1, **characterised in that** the displacing unit (100) is formed such that at a displacement of the pedal (10) initiated by the displacing unit (100) there is a constant pedal translation relationship.

$$\frac{\textit{first lever arm length (L}_1\textit{)}}{\textit{second lever arm length (L}_2\textit{)}} = const$$

3. Displaceable pedal (10) according to claim 1, **characterised in that** the displacing unit (100) is formed such that with a displacement of the pedal (10) initiated by the displacing unit (100) a defined change of the pedal translation relationship

$$\frac{\textit{first lever arm length (L}_1\textit{)}}{\textit{second lever arm length (L}_2\textit{)}}$$

takes place.

4. Displaceable pedal (10) according to claim 2 or 3, **characterised in that** the displacing unit (100) comprises a spindle (110) and a displacing guide (120) being in operational connection with the coupling point (14), wherein the spindle (110) has a first thread section (110-1) and a second thread section (110-2) and the first pedal bearing point (18) of the pedal basic body (16) is formed in the form of a pendulum nut (18a) guided on the spindle (110) in the region of the first thread section (110-1) and the displacing guide (120) is guided on the spindle (110) via a displacing guide section, in the region of the second thread section (110-2), having an inner thread, wherein the two thread sections (110-1, 110-2) have such different thread pitches that there is a constant pedal translation relationship or a defined change in the pedal translation relationship occurs.

5. Displaceable pedal (10) according to claim 2 or 3, **characterised in that** the displacing unit (100) comprises a first spindle (110) with a first thread pitch (110-1), a second spindle (110) with a second thread pitch (110-2) and a displacing guide (120) being in operational connection with the coupling point (14), wherein the first pedal bearing point (18) of the pedal basic body (16) is formed in the form of a pendulum nut (18a) guided on the first spindle (110) and the displacing guide (120) has an inner thread and is guided on the second spindle (110), wherein the thread pitches (110-1, 110-2) of the first and second spindles (110) correspond with one another such that there is a constant pedal translation relationship or a defined change in the pedal translation relationship occurs.

6. Displaceable pedal (10) according to one of the preceding claims, **characterised in that** the second pedal bearing point (20) of the pedal basic body (16) is formed in the form of a link pin (20a), which engages in a sliding track (20b) formed in the pedal arm (12) and is guided in a translational manner in the sliding track (20b) and that the bearing point (24) of the pedal plate (22) is formed as pivot bearing (26), wherein between pedal plate (22) and link pin (20a) is formed a Bowden cable connection (28) or coupling rod connection, wherein the Bowden cable connection (28) or the coupling rod connection are disposed such in a first radius distanced from the link pin (20a) and in a second radius distanced from the pivot bearing (26), that the relationship of the radii results in a translation ratio, so that the Bowden cable connection or the coupling rod connection is transformed the relative movement, occurring when the link pin (20a) is moved according to its linear guide in the sliding track (20b) and therewith the pedal basic body (16) in respect to the pedal arm (12) and when the pedal basic body (16) is simultaneously rotated around the roll centre (MP), between link pin (20a) and pivot bearing (26) of the pedal plate (22) and the length alteration resulting therefrom into a rotation of the pedal plate (22).

**7.** Displaceable pedal (10) according to claim 6, **characterised in that** in the pedal plate (22) is integrated a locking mechanism (200) inhibiting a rotational movement of the pedal plate (22) around the pivot bearing (26), which locking mechanism unlocks when the pedal (10) is displaced and frees the pedal plate (22) for rotation around the pivot bearing (26).

**8.** Displaceable pedal (10) according to claim 7, **characterised in that** the locking mechanism (200) comprises a first locking element (210) disposed rotatably on a bearing pin (26-1) of the pivot bearing (26), supporting the pedal plate (22), a second locking element (220) disposed non-rotatably on the bearing pin (26-1) and axially displaceably against a spring force of a spring element (230), and an electromagnet (240) for axially displacing the second locking element (220) against the spring force of the spring element (230), wherein the first and second locking element (210, 220) stand in engagement with one another by means of a gear.

**Revendications**

**1.** Pédale ajustable (10) pour un véhicule automobile, comprenant

- un bras de pédale (12), qui est monté pivotant autour d'un axe de pédale (a) sur un bloc de palier et qui comporte un point d'articulation (14) pour le couplage avec un dispositif à actionner par la pédale (10), lequel point d'articulation (14) est à une distance, égale à une première longueur de bras de levier (L₁), de l'axe de pédale (a),
- un corps de base de pédale (16) monté sur le bras de pédale (12) et ajustable par rapport au bras de pédale (12) ;
- une plaque de pédale (22), qui est agencée dans un point de support (24) au niveau de l'extrémité inférieure du corps de base de pédale (16), lequel point de support (24) de la plaque de pédale (22) est à une distance, égale à une deuxième longueur de bras de levier (L₂), de l'axe de pédale (a), ainsi que
- une unité d'ajustage (100), qui agit comme entraînement sur le corps de base de pédale (16) et au moyen de laquelle, en modifiant la deuxième longueur de bras de levier (L₂), le corps de base de pédale (16) et la plaque de pédale (22) agencée sur celui-ci réalisent un mouvement d'ajustage en forme d'arc par rapport au bras de pédale (12),

dans lequel le point d'articulation (14) est monté ajustable par rapport au bras de pédale (12), l'unité d'ajustage (100) agit aussi comme entraînement sur le point d'articulation (14) monté ajustable et le point d'articulation (14) est ajustable par rapport au bras de pédale (12) au moyen de l'unité d'ajustage (100) en modifiant la première longueur de bras de levier (L₁), **caractérisée en ce que** le corps de base de pédale (16) est monté sur le bras de pédale (12) de manière à pivoter autour d'un premier point de support de pédale (18) et autour d'un deuxième point de support de pédale (20), le premier et le deuxième point de support de pédale (18, 20) étant mobiles, guidés en translation, par rapport au bras de pédale (12).

**2.** Pédale ajustable (10) selon la revendication 1, **caractérisée en ce que** l'unité d'ajustage (100) est réalisée de telle sorte que, pour un ajustage de la pédale (10) provoqué par l'unité d'ajustage (100), on a un rapport de transformation de pédale constant

$$\frac{première\ longueur\ de\ bras\ de\ levier\ (L_1)}{deuxième\ longueur\ de\ bras\ de\ levier\ (L_2)} = constante.$$

**3.** Pédale ajustable (10) selon la revendication 1, **caractérisée en ce que** l'unité d'ajustage (100) est réalisée de telle sorte que, pour un ajustage de la pédale (10) provoqué par l'unité d'ajustage (100), on a une variation définie du rapport de transformation de pédale

$$\frac{première\ longueur\ de\ bras\ de\ levier\ (L_1)}{deuxième\ longueur\ de\ bras\ de\ levier\ (L_2)}.$$

**4.** Pédale ajustable (10) selon la revendication 2 ou 3, **caractérisée en ce que** l'unité d'ajustage (100) comprend une broche (110) et un guide d'ajustage (120) en liaison active avec le point d'articulation (14), laquelle broche (110) comporte un premier tronçon fileté (110-1) et un deuxième tronçon fileté (110-2) et le premier point de support de pédale (18) du corps de base de pédale (16) est réalisé sous la forme d'un écrou de rotule (18a) guidé sur la broche (110) dans la zone du premier tronçon fileté (110-1) et le guide d'ajustage (120) est guidé sur la broche (110) dans la zone du deuxième tronçon fileté (110-2) par l'intermédiaire d'un tronçon de guidage d'ajustage présentant un filetage intérieur, les deux tronçons filetés (110-1, 110-2) ayant des pas de filetage différents de sorte qu'un rapport de transformation de pédale constant existe ou qu'une variation définie du rapport de transformation de pédale apparaît.

5. Pédale ajustable (10) selon la revendication 2 ou 3, **caractérisée en ce que** l'unité d'ajustage (100) comprend une première broche (110) avec un premier pas de filetage (110-1), une deuxième broche (110) avec un deuxième pas de filetage (110-2) et un guide d'ajustage (120) en liaison active avec le point d'articulation (14), le premier point de support de pédale (18) du corps de base de pédale (16) étant réalisé sous la forme d'un écrou de rotule (18a) guidé sur la première broche (110) et le guide d'ajustage (120) ayant un filetage intérieur et étant guidé sur la deuxième broche (110), les pas de filetage (110-1, 110-2) de la première et de la deuxième broche (110) étant accordés de telle sorte l'un à l'autre qu'un rapport de transformation de pédale constant existe ou qu'une variation définie du rapport de transformation de pédale apparaît.

6. Pédale ajustable (10) selon l'une quelconque des revendications précédentes, **caractérisée en ce que** le deuxième point de support de pédale (20) du corps de base de pédale (16) est réalisé sous la forme d'une tige coulissante (20a) qui pénètre dans une trajectoire de coulissement (20b) réalisée dans le bras de pédale (12) et qui est guidé en translation dans la trajectoire de coulissement (20b) et **en ce que** le point de support (24) de la plaque de pédale (22) est réalisé comme un palier de pivotement (26), une liaison par câble sous gaine (28) ou une liaison par tige de couplage étant réalisée entre la plaque de pédale (22) et la tige coulissante (20a), la liaison par câble sous gaine (28) ou la liaison par tige de couplage étant agencées de telle sorte dans un premier rayon à une certaine distance de la tige coulissante (20a) et dans un deuxième rayon à une certaine distance du palier de pivotement (26) que le rapport des rayons donne un rapport de transformation tel que la liaison par câble sous gaine ou la liaison par tige de couplage le mouvement relatif apparaissant entre la tige coulissante (20a) et le palier de pivotement (26) de la plaque de pédale (22) lors d'une translation de la tige coulissante (20a) conformément à son guidage linéaire dans la trajectoire de coulissement (20b) et donc d'une translation du corps de base de pédale (16) par rapport au bras de pédale (12) et lors de la rotation simultanée du corps de base de pédale (16) autour du pôle instantané (MP) et la variation de longueur résultante sont transformées en une rotation de la plaque de pédale (22).

7. Pédale ajustable (10) selon la revendication 6, **caractérisée en ce qu'**un mécanisme de verrouillage (200) empêchant un mouvement de rotation de la plaque de pédale (22) autour du palier de pivotement (26) est intégré dans la plaque de pédale (22), lequel mécanisme de verrouillage déverrouille lors d'un ajustage de la pédale (10) et libère la plaque de pédale (22) pour la rotation autour du palier de pivotement (26).

8. Pédale ajustable (10) selon la revendication 7, **caractérisée en ce que** le mécanisme de verrouillage (200) comprend un premier élément de verrouillage (210) agencé rotatif sur un tourillon (26-1) du palier de pivotement (26) et supportant la plaque de pédale (22), un deuxième élément de verrouillage (220) agencé solidaire en rotation sur le tourillon (26-1) et déplaçable de façon axiale contre une force élastique d'un élément formant ressort (230) et un électroaimant (240) pour le déplacement axial du deuxième élément de verrouillage (220) contre la force élastique de l'élément formant ressort (230), le premier et le deuxième élément de verrouillage (210, 220) étant mutuellement en prise par l'intermédiaire d'une denture.

**Fig. 1**

**Fig. 2**

**Fig. 2a**

**Fig. 3**

**Fig. 4**

**Fig. 5**

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10335403 A1
- US 20030084749 A1
- WO 0177772 A1